# EUROPÄISCHE PATENTANMELDUNG

(11) **EP 3 702 062 A1**
(43) Veröffentlichungstag der Anmeldung: **02.09.2020**
(21) Anmeldenummer: 19160179.8
(22) Anmeldetag: 01.03.2019
(51) Int. Cl.: B21D 43/05

(54) **VORSCHUBVORRICHTUNG FÜR TRANSFERPRESSE**

(71) Anmelder: Adval Tech Holding AG, 3172 Niederwangen (CH)
(72) Erfinder: COMMON, Matthias, 3013 Bern (CH); GRAF, Urs, 3178 Bösingen (CH)
(74) Vertreter: Bremi, Tobias Hans

(57) **Zusammenfassung**

Vorrichtung (1) für den getakteten longitudinalen Transport von Werkstücken (11) zwischen wenigstens zwei Bearbeitungsstationen in einer Transferpresse. Die Vorrichtung (1) weist wenigstens auf einer Seite ein erstes (2) und ein zweites (3) ausschliesslich longitudinal verschiebliches Steuerelement als Steuergruppe (2, 3) auf, wobei die beiden Steuerelemente (2,3) relativ zueinander in ausschliesslich longitudinaler Richtung verschieblich gelagert sind, und beide Steuerelemente (2,3) über eine gemeinsame Welle (58) angetrieben werden. Beim ersten Steuerelement handelt es sich um eine Greiferstange (2) für den longitudinalen Transport der Werkstücke (11) zwischen den Bearbeitungsstationen, und in der Greiferstange (2) sind wenigstens zwei in longitudinaler Richtung um den Abstand zwischen den Bearbeitungsstationen versetzte Greiferelemente (4) gelagert, welche ausschliesslich in transversaler Richtung verschoben werden können. Beim zweiten Steuerelement handelt es sich um eine Schubstange (3), welche die Transversalbewegung der wenigstens zwei Greiferelemente (4) zwangsmässig steuert.

## Beschreibung

### TECHNISCHES GEBIET

Die vorliegende Erfindung betrifft eine Vorschubvorrichtung für eine Transferpresse, eine Transferpresse mit einer derartigen Vorschubvorrichtung, sowie Verfahren zum Betrieb derartiger Vorschubvorrichtungen.

### STAND DER TECHNIK

Transferpresswerke sind industrielle Einheiten mit mehreren getakteten Pressen zur sequenziellen Bearbeitung von Werkstücken, wobei insbesondere in nacheinander geschalteten Bearbeitungsstationen Schritte wie Stanzen, Umformen, Abstrecken sequenziell oder auch teilweise gleichzeitig (insbesondere Stanzen und Umformen) in einer Station am gleichen Werkstück vollzogen werden können, gegebenenfalls in Kombination mit anderen Operationen wie beispielsweise Qualitätskontrolle, Kühlung, Aufheizen, etc. Derartige Vorrichtungen können mit sehr hohen Taktfrequenzen betrieben werden und werden vor allem zur Herstellung von metallischen Bauteilen mit grossen Stückzahlen eingesetzt, beispielsweise im Automobilbereich für strukturelle Bauteile, im Möbelbereich und im Telekommunikationsbereich respektive Computerbereich ebenfalls für strukturelle Bauteile, aber auch im Lebensmittelbereich für die Herstellung von Behältern wie beispielsweise Töpfen, Nahrungsmittelschalen, auch beispielsweise Kaffeekapseln aus Aluminium oder Weissblech.

Für den Transport zwischen den verschiedenen Bearbeitungsstationen werden sogenannte Transfervorrichtungen vorgesehen. Diese greifen das bearbeitete Werkstück nach Beendigung der jeweiligen Operation, und transportieren es in longitudinaler Richtung zur Position der nächsten Bearbeitungsstation, um es dort dann im richtigen Zeitpunkt freizugeben, d. h. in der Regel zum Zeitpunkt, wenn ein Positionierungselement oder Einführungselement des Werkzeugs in das Werkstück eingegriffen hat oder kurz davor ist.

Derartige Transfervorrichtungen müssen auf der einen Seite in der Lage sein, mit den hohen Taktfrequenzen im kurzen Zeitabschnitt, in welchem das Werkzeug geöffnet ist, die Werkstücke sicher zwischen den Stationen zu transportieren, und auf der anderen Seite müssen sie aber auch in der Lage sein, das Werkstück nicht nur positionsgenau an der richtigen Stelle zu ergreifen und wieder abzusetzen, sondern dies auch so zu tun, dass insbesondere zum Beispiel metallische Werkstücke mit geringen Wandstärken während des Transportes nicht deformiert werden und Ausschuss respektive Maschinenstillstände vermieden werden können. Die Transfervorrichtungen sind entsprechend nicht nur auf den Hub der Presse optimal anzupassen, sondern sie sind auch in Bezug auf den Transportweg und die Behandlung des Werkstücks während des Transports sehr gut kontrolliert und einstellbar vorzusehen.

### DARSTELLUNG DER ERFINDUNG

Es ist entsprechend unter anderem Gegenstand der vorliegenden Erfindung, eine verbesserte und insbesondere für hohe Taktfrequenzen und empfindliche Werkstücke, zum Beispiel metallische Werkstücke mit geringen Wandstärken, geeignete Vorrichtung für den getakteten longitudinalen Transport von Werkstücken zwischen wenigstens zwei Bearbeitungsstationen in einer Transferpresse zur Verfügung zu stellen. Weiterhin ist es Gegenstand der vorliegenden Erfindung, eine Transferpresse mit einer derartigen Vorrichtung bereitzustellen, sowie Verfahren und Verwendungen im Zusammenhang mit derartigen Vorrichtungen.

Diese Aufgabe wird gelöst durch die Gegenstände der angehängten Ansprüche.

Gemäss der Erfindung ist die Vorrichtung insbesondere dadurch gekennzeichnet, dass sie wenigstens auf einer Seite (in transversaler Richtung bezüglich einer Folge von Bearbeitungsstationen in einer Transferpresse) ein erstes und ein zweites ausschliesslich longitudinal verschiebliches Steuerelement aufweist. Eine solche Kombination eines ersten und zweiten ausschliesslich longitudinal verschieblichen Steuerelements bildet eine sogenannte Steuergruppe. Dabei sind die beiden Steuerelemente relativ zueinander in ausschliesslich longitudinaler Richtung verschieblich gelagert, und beide Steuerelemente werden vorzugsweise über eine gemeinsame Welle angetrieben.

Dabei ist als longitudinale Richtung jene Richtung im Werkzeug definiert, entlang welcher die Bearbeitungsstationen in ihrer Folge versetzt sind, und entlang welcher die Werkstücke zwischen den Bearbeitungsstationen transportiert werden. Als transversale Richtung ist die horizontale Richtung senkrecht zur genannten longitudinalen Richtung zu verstehen. Dies ist typischerweise die Bewegungsrichtung der weiter unten beschriebenen Greiferelemente. Als dritte Richtung ist die vertikale Richtung definiert, diese steht senkrecht auf der longitudinalen Richtung und der transversalen Richtung.

Erfindungsgemäss handelt es sich beim ersten Steuerelement um eine Greiferstange für den longitudinalen Transport der Werkstücke zwischen den Bearbeitungsstationen, und in der Greiferstange sind wenigstens zwei in longitudinaler Richtung um den Abstand zwischen den jeweiligen Bearbeitungsstationen der Presse versetzte Greiferelemente gelagert, welche ihrerseits ausschliesslich in transversaler Richtung verschoben werden können.

Beim zweiten Steuerelement handelt es sich um eine Schubstange, welche die Transversalbewegung der wenigstens zwei Greiferelemente zwangsmässig steuert, z.B. über eine Kurvensteuerung.

Die Transfervorrichtung beinhaltet mit anderen Worten wenigstens auf einer Seite eine Steuergruppe, die jeweils eine Greiferstange und eine Schubstange beinhaltet, beide diese Stangen sind nur in longitudinaler Richtung verschieblich. Die Schubstange steuert nun zwangsmässig, vorzugsweise über Mittel (z.B. Kurvensteuerung), die weiter unten beschrieben werden, die Transversalbewegung der Greiferelemente im Transportprozess.

So ist es möglich, die Vorschubbewegung der Werkstücke im Wesentlichen über die die Bewegung der Greiferstange zu kontrollieren, und synchronisiert dazu die Transversalbewegung der darin gelagerten Greiferelemente über die Schubstange der Steuergruppe. Auch bei hohen Taktfrequenzen kann dadurch insbesondere auch zum Zeitpunkt oder in der Phase des Ergreifens und des Loslassens des Werkstücks der Prozess optimal so auf den Werkzeugtakt eingestellt werden, dass die Übergabe zwischen Transfervorrichtung und Werkzeug (in beide Richtungen) störungsfrei und auch bei delikaten Werkstücken kontrolliert abläuft.

Eine erste bevorzugte Ausführungsform der vorgeschlagenen Vorrichtung ist dadurch gekennzeichnet, dass die Schubstange jeweils in oder an der Greiferstange wenigstens abschnittsweise gleitend gelagert ist. Dies beispielsweise und bevorzugt in einer longitudinalen Nut, die bevorzugt wenigstens abschnittsweise nach oben offen ist und/oder abschnittsweise durch Abdeckungen geschlossen ist. Diese Nut kann sich beispielsweise über die gesamte Länge der Greiferstange erstrecken, zum Beispiel in Form einer Rechtecknut, und die Schubstange kann als entsprechende Stange in diese Nut eingelegt sein. Das Gleiten der Schubstange kann bei dieser Anordnung beispielsweise erleichtert werden, indem Rollen- oder Kugellager vorgesehen werden, an der Greiferstange und/oder an der Schubstange, oder durch entsprechende Abschnitte mit Gleitlagern, zum Beispiel aus speziell beschichtetem gehärtetem Stahl.

Schubstange und Greiferstange können über zwei von der gemeinsamen Welle angetriebene aber für die jeweilige Stange individuelle Kurvengetriebe bewegt werden. Gibt es mehrere Steuergruppen, so werden vorzugsweise alle Schubstangen dieser Gruppen vom gleichen Kurvengetriebe angetrieben, und alle Greiferstangen vom gleichen Kurvengetriebe. Dabei erzeugen vorzugsweise die beiden Kurvengetriebe für die Schubstange respektive die Greiferstange im Wesentlichen die gleiche oder zumindest sehr ähnliche Bewegung aber mit relativer Phasenverschiebung jeweils vor Erreichen, während des Erreichens und/oder nach Erreichen der beiden Endpositionen.

So ist es insbesondere bevorzugt möglich, die Schubstange mit dem Kurvengetriebe für die Schubstange in der Vorwärtsbewegung mit der Greiferstange synchron mitzuführen, bis die Greiferstange die Endposition vorne erreicht hat, und dann die Schubstange für die Freigabe der Werkstücke ohne Bewegung der Greiferstange (oder mit einer gleichzeitigen geringeren Rückwärtsbewegung als jene der Schubstange) etwas zurück zu verschieben. So wird über die Endposition der Greiferstangen vorne die genaue longitudinale Endposition des Werkstücks vorgegeben und die Freigabebewegung der Greifer davon entkoppelt und über die Schubstange realisiert.

Analog in der Rückwärtsbewegung, auch hier kann die Schubstange in der Rückwärtsbewegung mit der Greiferstange synchron mitgeführt werden, bis die Greiferstange die Endposition hinten erreicht hat, um dann die Schubstange für die Freigabe der Werkstücke ohne Bewegung der Greiferstange (oder mit einer gleichzeitigen geringeren Vorwärtsbewegung als jene der Schubstange) etwas vorwärts zu verschieben, um die Greifer zu schliessen. So wird über die Endposition der Greiferstangen hinten die genaue longitudinale Übernahmeposition für das Werkstück vorgegeben, und die Greifbewegung der Greifer davon entkoppelt und über die Schubstange realisiert.

Über eine entsprechende Kulisse (Kurvensteuerung) zwischen Schubstange und Greiferelementen kann dann genau in diesem Phasenverschiebungsabschnitt gezielt die Transversalbewegung der Greiferelemente im richtigen Moment des Prozesses optimal gesteuert werden für das Ergreifen respektive das loslassen der Werkstücke.

Die Greiferelemente verfügen bevorzugter Massen für die Realisierung einer solchen Steuerung über wenigstens eine bevorzugt in vertikaler Richtung offene Ausnehmung oder Durchgangsöffnung in Form einer Kulisse und die Schubstange verfügt jeweils an der Position des entsprechenden Greiferelements über eine in diese Kulisse zwangsmässig die Transversalbewegung der Greiferelemente steuernd eingreifende Erweiterung oder einen derartig eingreifenden bevorzugt vertikalen Stift.

Im Sinne einer kinematischen Vertauschung ist es alternativ möglich, dass die Schubstange jeweils an der Position des entsprechenden Greiferelements wenigstens eine in vertikaler Richtung offene Ausnehmung oder Durchgangsöffnung in Form einer Kulisse aufweist, und dass die Greiferelemente eine in diese Kulisse zwangsmässig die Transversalbewegung der Greiferelemente steuernd eingreifende Erweiterung oder entsprechenden Stift aufweisen.

Die Erweiterungen respektive Stifte verfügen bevorzugt über eine kreisrunde Querschnittsfläche, um optimal in der Kulisse zu gleiten.

Die Kulisse in den Greiferelementen kann jeweils einen ersten Bereich für zurückgezogenes Greiferelement und einen zweiten Bereich für ausgefahrenes Greiferelement und einen diese beiden Bereiche verbindenden Verschiebungsbereich aufweisen. Dabei ist bevorzugt der erste Bereich im Greiferelement in transversaler Richtung näher beim Werkstück angeordnet als der zweite Bereich, und der Verschiebungsbereich ist als linearer oder gekrümmter, insbesondere S-förmiger Verbindungskanal oder Verbindungs-Durchgangsöffnung ausgebildet. Der erste Bereich und der zweite Bereich können einzeln oder beide über eine gewisse longitudinale Länge linear verlaufen, und die Enden der Kulisse schliessen in der Regel bevorzugt über eine Krümmung ab, die der Aussenlinie des entsprechenden Führungsstiftes entspricht.

Die Vorrichtung verfügt vorzugsweise auf beiden Seiten einer longitudinalen Reihe von Bearbeitungsstationen über derartige erste und zweite Steuerelemente, sprich Steuergruppen, wobei die Transversalbewegung der jeweils transversal gegenüberliegenden Greiferelemente spiegelsymmetrisch bezüglich Werkstückposition zwangsmässig gesteuert sind. Dazu werden entsprechende Kulissen in Form von Ausnehmungen oder Durchgangsöffnungen vorzugsweise spiegelsymmetrisch bezüglich der zentralen longitudinalen Achse des Werkzeugs ausgebildet.

Eine solche Vorrichtung ist vorzugsweise dadurch gekennzeichnet, dass sie für den Transport zwischen wenigstens zwei, vorzugsweise 2-5 oder 2-4 longitudinalen Reihen (die Reihen sind in transversaler Richtung versetzt) von Bearbeitungsstationen der gleichen Transferpresse vorgesehen ist, und eine um eins grössere Zahl von jeweils ersten und zweiten Steuerelementen als die Zahl der Reihen von Bearbeitungsstationen aufweist. Jeweils zwischen zwei Reihen liegende Steuergruppen stellen also die Funktionalität in beide transversale Richtungen zur Verfügung, d. h. tragen gleichzeitig die Greifer für beide Seiten und Steuern diese für beide Seiten, vorzugsweise mit nur einer Greiferstange und nur einer Schubstange. Bevorzugter Massen sind dabei die Bearbeitungsstationen von in benachbarten Reihen angeordneten Werkzeugen in longitudinaler Richtung nicht auf der gleichen Höhe, sondern beispielsweise alternierend versetzt.

Die zwischen Reihen von Bearbeitungsstationen angeordneten ersten Steuerelemente lagern bevorzugt in beide transversale Richtungen hervorragende Greiferelemente und die zweiten Steuerelemente steuern vorzugsweise gleichzeitig die Greiferelemente in beiden transversalen Richtungen gleichzeitig zwangsmässig. Dabei sind vorzugsweise die Kulissen in den in unterschiedliche transversale Richtungen ragenden Greiferelementen spiegelsymmetrisch bezüglich longitudinaler Richtung ausgebildet.

Die zwischen Reihen von Bearbeitungsstationen angeordneten ersten Steuerelemente weisen bevorzugt transversal verlaufende Durchgangsöffnungen auf, in welchen die Greiferelemente oder Greiferträger von Greiferelementen verschieblich gelagert sind. In longitudinaler Richtung sind normalerweise jeweils alternierend Greiferelemente in die eine und die andere transversaler Richtung gelagert.

Die ersten Steuerelemente der parallel angeordneten Steuergruppen werden bevorzugt in ihrer Bewegung über einen gemeinsamen transversal verlaufenden Kupplungsquerträger für die Greiferstangen gesteuert, und die zweiten Steuerelemente über einen gemeinsamen transversal verlaufenden Kupplungsquerträger für die Schubstangen. Dabei ist der Kupplungsquerträger für die Greiferstangen, vorzugsweise über wenigstens eine Kupplungsstange, an ein Kurvengetriebe für die Greiferstangen angebunden und der Kupplungsquerträger für die Schubstangen, vorzugsweise über wenigstens eine Kupplungsstange, an ein Kurvengetriebe für die Schubstangen angebunden.

Wenigstens eines der Greiferelemente weist vorzugsweise selbst oder an einem Greiferstift einen dem Werkzeug zugewandten gabelförmigen und/oder gekrümmten Greifbereich zur wenigstens teilweisen umfangsmässigen Umfassung des Werkstücks auf, wobei vorzugsweise der Greifbereich an den Radius des Werkstücks im entsprechenden Transportabschnitt angepasst ist.

Oder wenigstens eines der Greiferelemente weist eine dem Werkstück zugewandte im wesentlichen planare Greiferspitze auf. Vorzugsweise weisen bezüglich Werkstück gegenüberliegende und das gleiche Werkzeug greifende Greiferelemente auf der einen Seite eine im wesentlichen planare Greiferspitze und auf der anderen Seite einen gabelförmigen und/oder gekrümmten Greifbereich auf, wenn kreissymmetrische Werkstücke zwischen den Bearbeitungsstationen transportiert werden sollen, beispielsweise Behälter oder Dosenabschnitte.

Wenigstens eines der Greiferelemente kann einen Greiferträger aufweisen, der in der Greiferstange ausschliesslich transversal verschieblich gelagert ist, und in diesem Greiferträger verschieblich einen Greiferstift aufweist, welcher vorzugsweise elastisch gegen das Werkstück verspannt ist, vorzugsweise über eine Feder, insbesondere eine Spiralfeder, oder über Druckluft oder eine Elastomerfeder, wobei die Rückstellung vorzugsweise einstellbar ausgestaltet ist.

In Abhängigkeit der entsprechenden Bearbeitungsstationen können die das jeweilige Werkstück kontaktierenden Bereiche der Greiferelemente respektive der in einem Greiferträger gelagerten Greiferstifte in vertikaler Richtung auf unterschiedlicher Höhe angeordnet sein, vorzugsweise indem die Greiferelemente respektive die Greiferstifte zwei horizontale und einen diese verbindenden vertikalen Abschnitt aufweisen.

Die vorliegende Erfindung betrifft weiter ein Verfahren zum Transport von Werkstücken zwischen verschiedenen Bearbeitungsstationen einer Transferpresse, welches insbesondere dadurch gekennzeichnet ist, dass wenigstens eine Vorrichtung wie oben beschrieben für den Transport zwischen den Stationen eingesetzt wird.

Zudem betrifft die vorliegende Erfindung eine Transferpresse mit einer Vorrichtung wie oben beschrieben, vorzugsweise eine Transferpresse mit mehreren in transversaler Richtung versetzten Reihen von Bearbeitungsstationen.

Zu guter letzt betrifft die vorliegende Erfindung die Verwendung einer Vorrichtung wie oben beschrieben in einer Transferpresse, vorzugsweise einer Transferpresse mit mehreren in transversaler Richtung versetzten Reihen von Bearbeitungsstationen.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine Transfervorrichtung in perspektivischer Ansicht mit fünf Greiferstangen für vier Bearbeitungslinien mit sieben Stationen in jeder Linie;
- Fig. 2: die Transfervorrichtung nach Figur 1 in einer Aufsicht mit geschlossenen Greifern;
- Fig. 3: die Transfervorrichtung nach Figur 1 in einer Aufsicht mit geöffneten Greifern;
- Fig. 4: den Schnitt entlang A-A in Figur 2;
- Fig. 5: den Schnitt entlang B-B in Figur 3;
- Fig. 6: den Schnitt entlang C-C in Figur 4 (unten);
- Fig. 7: den Schnitt entlang D-D in Figur 5;
- Fig. 8: eine perspektivische Ansicht des Kupplungsbereichs einer Greiferstange;
- Fig. 9: eine perspektivische Ansicht des Kupplungsbereichs der ganzen Transfervorrichtung mit fünf Greiferstangen;
- Fig. 10: Seitenansicht auf eine ganze Transferpresse mit Bearbeitungsstationen, Transfervorrichtung sowie Getriebe und Kupplungselemente für den Antrieb der Transfervorrichtung;
- Fig. 11: Getriebe und Kupplung der Transfer-Bearbeitungsanlage gemäss Figur 10 in einer Schnittdarstellung.

### BESCHREIBUNG BEVORZUGTER AUSFÜHRUNGSFORMEN

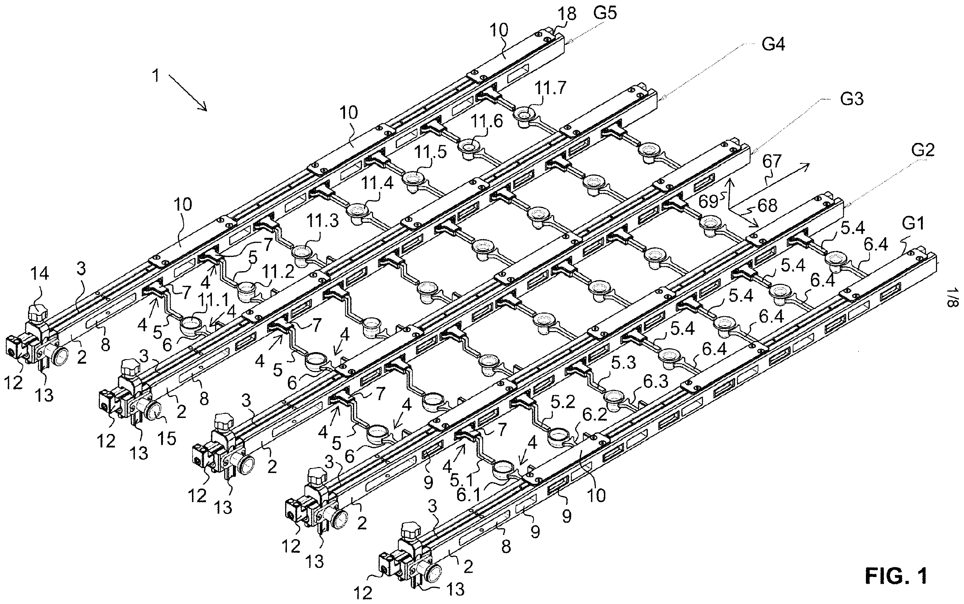

In **Figur 1** ist eine Vorschubvorrichtung in einer perspektivischen Darstellung wiedergegeben, wobei die Vorschubvorrichtung 1 für eine Presse mit vier Bearbeitungslinien ausgelegt ist, die jeweils in transversaler Richtung 68 versetzt sind.

Entlang der longitudinalen Richtung 67 ist die Transfervorrichtung für jeweils sieben Bearbeitungsstationen des Pressewerkzeuges vorgesehen, die verschiedene Bearbeitungsschritte am Werkstück umsetzen.

Ebenfalls in Figur 1 dargestellt sind beispielhaft, obwohl nicht durch die Greifer ergriffen, Werkstücke in den verschiedenen Bearbeitungsstationen. Beim Werkstück 11 handelt es sich um ein topfförmiges Bauteil, das in der ersten Bearbeitungsstation (am weitesten links in der Figur) zu einem topfförmigen Rohling 11.1 umgeformt wird. In diesem Schritt wird typischerweise im gleichen Werkzeug unmittelbar nacheinander ein entsprechender kreisrunder Blechabschnitt ausgestanzt und dann zu einem Topf 11.1 gezogen.

Dann folgt in longitudinaler Richtung 67 versetzt die nächste Bearbeitungsstation, hier wird das topfförmige Bauteil weiter umgeformt zum Bauteil 11.2.

So folgen weitere Bearbeitungsschritte zu den stufenweise umgeformten Bauteilen 11.3, 11.4, 11.5, 11.6 und 11.7. Häufig handelt es sich bei der letzten Stufe, bei der das Bauteil 11.7 dargestellt ist, nicht um eine weitere Bearbeitungsstufe, sondern hier wird das Bauteil 11.7, das dann identisch ist zu jenem, das mit 11.6 dargestellt ist, nur noch zur entsprechenden Position transportiert und entweder an eine andere Handlingvorrichtung übergeben oder in eine entsprechende Führung losgelassen und fallengelassen.

Die Vorschubvorrichtung 1 verfügt nun über jeweils stangenförmig ausgebildete Steuergruppen, wobei es zwei aussenliegende Steuergruppen G1 und G5 gibt, die jeweils nur einseitig über gewissermassen nach innen gerichtete Greifer verfügen. Die zwischen zwei Reihen angeordneten Steuergruppen G2-G4 bedienen jeweils gleichzeitig die beiden in transversaler Richtung danebenliegenden Bearbeitungsstationen.

Eine solche Steuergruppe G ist jeweils aufgebaut aus einer Greiferstange 2 und einer in einer longitudinalen nach oben offenen Nut 18 geführten Schubstange 3. Diese Nut 18 wird jeweils abschnittsweise abgedeckt durch Abdeckungen 10. Die Abdeckung 10 kann wie hier dargestellt nur bereichsweise ausgebildet sein in einzelnen Abschnitten, die Abdeckung 10 kann aber auch im Wesentlichen über die Länge der gesamten Greiferstange 2 ausgebildet sein.

Die Greiferstangen 2 verfügen über transversale Durchgangsöffnungen 8 und 9. Gewisse dieser Durchgangsöffnungen, konkret die mit dem Bezugszeichen 8 angegebene quasi erste Durchgangsöffnung, hat jeweils keine besondere Funktion. Die dann in longitudinaler Richtung aber folgende Reihe von transversalen Durchgangsöffnungen 9 dient dazu, die Greifelemente 4 aufzunehmen und transversal beweglich zu lagern.

Die Greiferelemente 4 sind jeweils auf der einen Seite aufgebaut aus einem Greiferträger 7, in welchem ein Greiferstift 5 gelagert ist. Der Greiferträger 7 ist gleitend jeweils in einer Durchgangsöffnung 9 der Greiferstange gelagert. Nur jede zweite Durchgangsöffnung ist in den aussenliegenden Greiferstangen G1 und G5 jeweils mit einem Greiferelement bestückt. Die dazwischenliegenden Durchgangsöffnungen liegen frei.

Anders bei den zwischen jeweils zwei Bearbeitungslinien liegenden Greiferstangen G2-G4. Hier werden jeweils alternierend in den Durchgangsöffnungen 9 Greiferelemente 4 gelagert, die alternierend in unterschiedliche transversale Richtungen aus der Greiferstange 2 herausragen und die beiden unterschiedlichen Bearbeitungslinien auf beiden Seiten bedienen.

Die Werkzeuge der vier Reihen von Bearbeitungslinien, die hier nebeneinander vorgesehen sind, sind entsprechend, damit diese Transfervorrichtung eingesetzt werden kann, nicht in transversaler Richtung alle auf einer Linie angeordnet, sondern jeweils um den Versatz der transversalen Durchgangsöffnungen 9 alternierend versetzt.

Die verschiedenen Bearbeitungsstationen entlang der Linie in longitudinaler Richtung bearbeiten gegebenenfalls die Werkstücke auf unterschiedlichen vertikalen Höhen, respektive die Werkstücke müssen, obwohl die Werkzeuge auf der gleichen Höhe angeordnet sind, auf unterschiedlichen vertikalen Positionen gegriffen werden. Zu diesem Zweck sind die Greiferelemente 4 jeweils gestuft ausgebildet, so in der ersten Bearbeitungsstation maximal nach unten versetzt zum Greifen des Werkstücks 11.1, dann sukzessive weiter nach oben bis zur Position beim Werkstück 11.4, und dann immer auf der gleichen vertikalen Höhe bis zur letzten Position.

Am eingangsseitigen Ende verfügt die Schubstange jeweils über ein Kupplungselement 12, dessen Funktion weiter unten dargelegt wird. Analog verfügt jeweils jede Greiferstange 2 über ein Kupplungselement 13, das hier vertikal nach unten gerichtet ist. Entsprechende Stellschrauben 14 und 15 erlauben eine optimale Ajustierung sowohl von Greiferstange als auch von Kupplungselement.

Die jeweils in Figur 1 auf der rechten Seite aus der jeweiligen Greiferstange herausragenden Greiferelemente 4 sind wie oben dargelegt aus zwei Elementen ausgebaut, einem Greiferträger 7, in dem jeweils ein Greiferstift 5 gelagert ist. Die gegenüberliegenden, und bei der Greiferstangen G1-G4 in Figur 1 nach links respektive schräg links oben hervorragenden Greiferelemente 4 sind nicht zweistückig ausgebildet, sondern als einstückige Greifergabeln 6. Diese Greifergabeln 6 verfügen über gekrümmte Greifbereiche, die weiter unten im Detail dargelegt werden sollen, im Gegensatz zu den Werkstücken zugewandten Enden der Greiferstifte 5, diese sind ohne Führungsfunktion in longitudinaler Richtung.

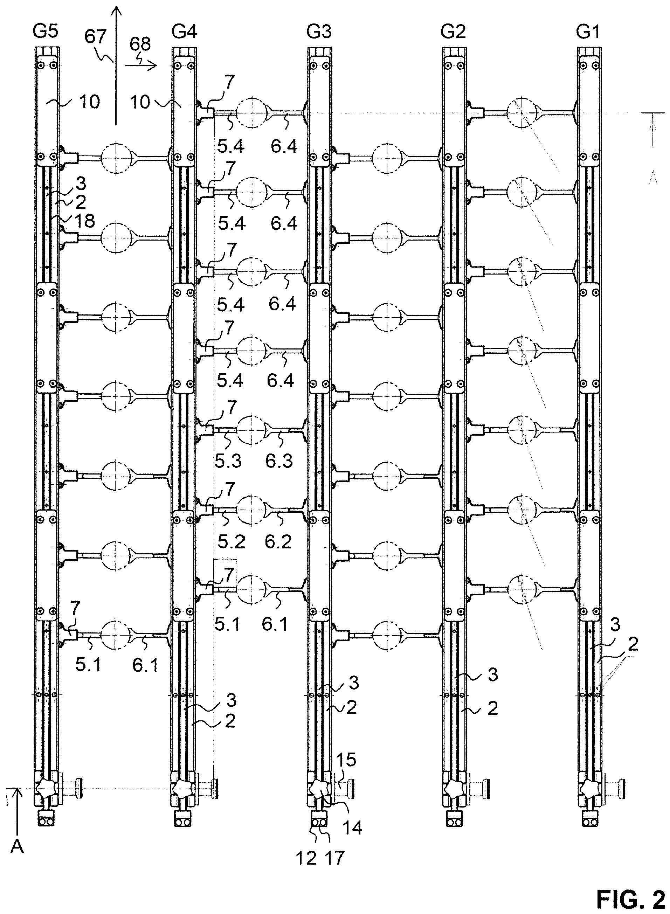

**Figur 2** zeigt eine solche Vorschubvorrichtung in einer Ansicht von oben in der Position, in welcher die Greifer jeweils geschlossen sind, mithin das hier nur noch jeweils schematisch dargestellte Werkstück jeweils klemmend greifen. Dies ist die Position, bei welcher die Vorschubvorrichtung gewissermassen fixiert ist in jenem Zeitabschnitt, in welchem die Werkstücke zwischen den einzelnen Bearbeitungszonen transportiert werden. In dieser Figur ist zudem erkennbar, wie die Greifer in benachbarten Reihen jeweils in longitudinaler Richtung versetzt sind, sodass es eben möglich ist, in den transversalen Durchgangsöffnungen 9 der Greiferstangen 3 die Greiferelemente 4 optimal in den Stangen G2-G4 zu lagern.

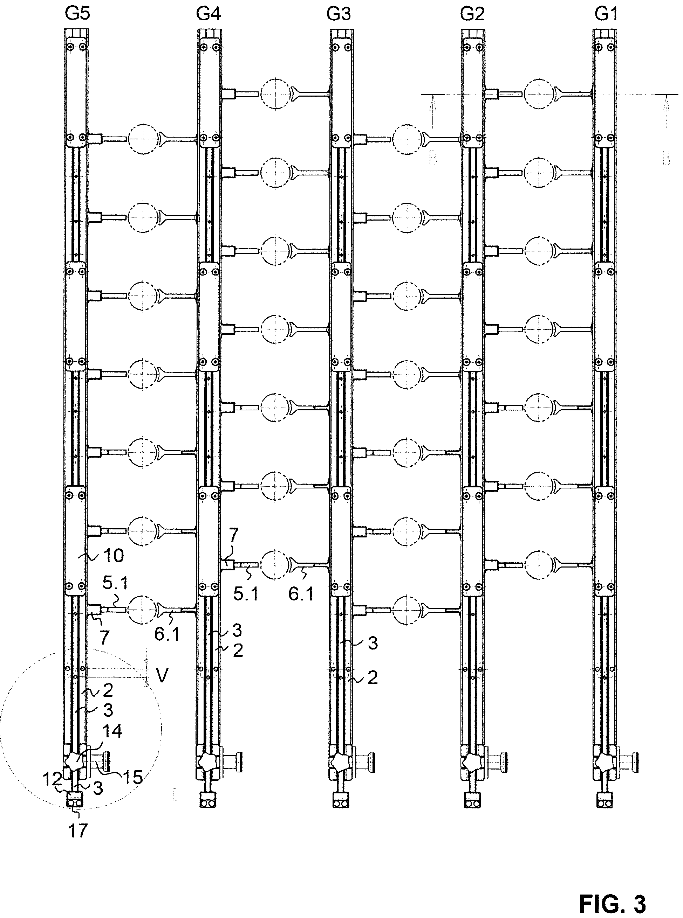

**Figur 3** zeigt ebenfalls eine solche Vorschubvorrichtung, nun aber in der gewissermassen geöffneten Position, das heisst in jener Position, in welcher die Greiferelemente jeweils zurückgezogen sind und das Werkstück nicht halten. Dies ist die Position kurz vor dem ergreifen des Werkstücks vor einem Transferschritt respektive die Position nach dem Loslassen des Werkstücks am Ende eines Transferschritts. Dies ist auch die Position, in welcher die Rückwärtsbewegung der Vorschubvorrichtung durchgeführt wird.

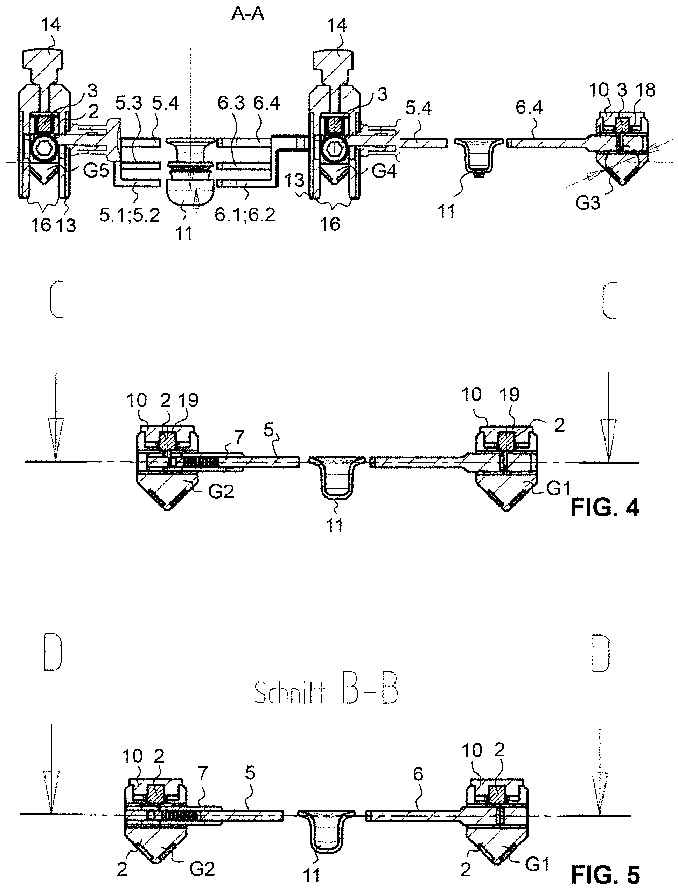

**Figur 4** zeigt den Schnitt entlang der Linie A-A wie angegeben in Figur 2. Hier ist erkennbar, wie die Greiferstifte auf unterschiedlichen vertikalen Höhen angeordnet sind. Der Greiferstift 5.1 und jener von der nächsten Station, das heisst 5.2, sind am weitesten vertikal unten angeordnet und greifen entsprechend das topfförmige Werkstück vertikal am tiefsten. Dann folgt in der dritten Station eine mittlere Höhe, hier ist der Greiferstift mit 5.3 bezeichnet, und dann folgen die linearen Greiferstifte 5.4-5.7. Dies für die jeweils linke Seite, wo die Greiferelemente zweiteilig aufgebaut sind aus Greiferträger 7 und Greiferstift 5. Auf der gegenüberliegenden Seite ist die entsprechende Greifergabeln 6 ebenfalls gestuft ausgebildet, in der ersten Station in Form der Greifergabeln 6.1 und 6.2, in der mittleren vertikalen Greiferposition als Greifergabel 6.3 und anschliessend als Greifergabeln 6.4 für die folgenden Stationen 4-7.

Zudem wird in Figur 4 ersichtlich, wie das Kupplungselement 13 für die Greiferstange 2 jeweils gabelförmig ausgebildet ist, mit den zwei Gabelarmen 16, die nach unten hervorstehen. Weiter ist erkennbar, wie die Schubstange 3 als massive Stange mit quadratischer Querschnittsfläche ausgebildet ist und in der Nut 18 in der Greiferstange 2 gleitet. Weiter ist anhand der Schnittdarstellungen bei G1-G3 erkennbar, wie die Abdeckungen zur besseren Führungen der Greiferstange ebenfalls über eine nach unten geöffnete longitudinale Nut 19 verfügen.

Insbesondere anhand der Schnittdarstellung bei G2 in Figur 4 ist zudem erkennbar, wie der Führungsstift 5 in einer dafür vorgesehenen Ausnehmung im Greiferträger 7 gefedert gelagert ist, dies wird weiter unten im Detail dargelegt werden. Weiter ist ersichtlich, wie die Greiferstangen 2 nach unten über eine v-förmige Profilierung verfügen, diese liegt beispielsweise gleitend in einer v-förmigen Nut in einer Trägerstruktur, die stationär ist, sodass die Greiferstangen kontrolliert darin gleiten können. Es können, wie durch entsprechend dunklere Bereiche angedeutet, dazu besondere Gleitelemente oder Beschichtungen, beispielsweise aus PTFE, in oder an den unteren Flächen der Greiferstangen vorgesehen werden.

In **Figur 5** ist ein Schnitt entlang der Linie B-B in Figur 3 dargestellt. Hier ist mithin die geöffnete Position der Greifer illustriert, was man auch darin erkennt, dass die weiter unten erläuternden Kulissenöffnungen 26 bezüglich Schubstangen 2 nun jeweils lateral aussen dargestellt sind.

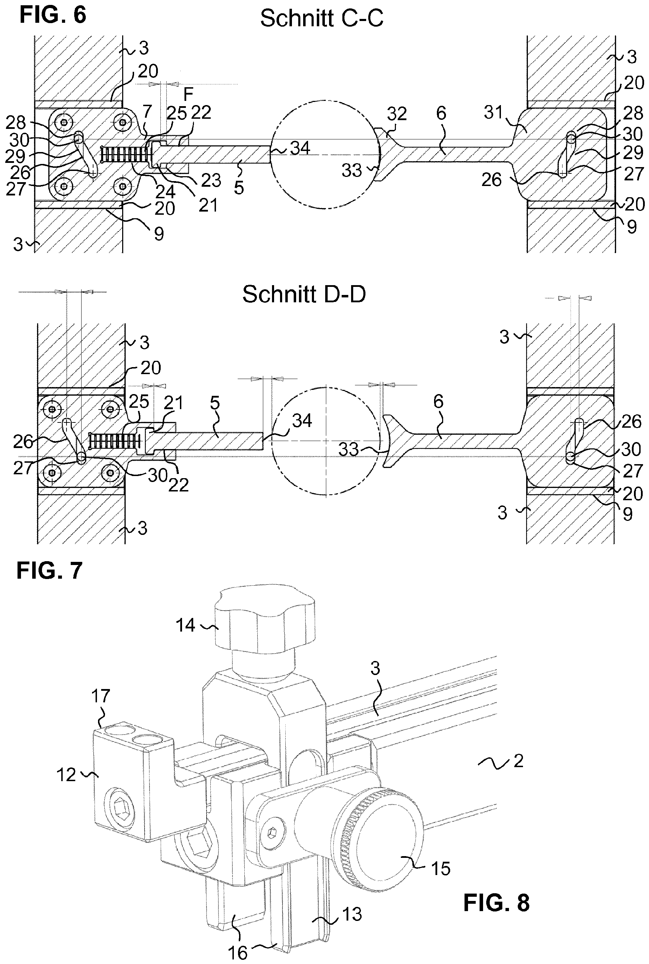

In **Figur 6** ist der Schnitt entlang der Linie C-C in Figur 4 (unten) dargestellt. In dieser Schnittdarstellung sind die zwangsmässige Steuerung der Greiferelemente und die spezifische Ausbildung der Greiferelemente für den geschlossenen Zustand erkennbar. Der offene Zustand ist entsprechend dem Schritt D-D in Figur 7 illustriert.

Zunächst zur Figur 6: Hier ist erkennbar, wie in der jeweiligen Greiferstange 2 in der transversalen Durchgangsöffnung 9 auf der linken Seite der Greiferträger 7 gelagert ist. Zur leichteren Verschieblichkeit des Greiferträgers 7 können Gleitplatten 20 vorgesehen werden, und zwar nicht nur, wie hier ersichtlich, jeweils in longitudinaler Richtung an den Begrenzungswänden, sondern auch in vertikaler Richtung, das heisst oben und unten ind der Ausnehmung 9 beim jeweiligen Greiferträger 7. Ein solcher Greiferträger 7 gleitet mit seinem linksseitigen Bereich in der Ausnehmung 9, und auf der rechten Seite verjüngt sich der Greiferträger zu einem Fortsatz, welcher eine Ausnehmung 22 in Form eines Sacklochs für den Greiferstift aufweist. Der Greiferstift 5 verfügt an seinem dem Werkstück abgewandten Ende über eine kolbenförmige Erweiterung 21, dieser Kolben 21 ist in einem Erweiterungsbereich des Durchgangs 22 im Greiferträger 7 vorgesehen. Im inneren Bereich 24 des Durchgangs 22 ist ein Federelement 25 in Form einer Spiralfeder vorgesehen. Diese Spiralfeder 25 verspannt jeweils den Greiferstift 5 zum Werkstück hin, bis zum Anschlag des Kolbens 21 an der Erweiterung 23 des Durchgangs 22. Durch diese ggf. einstellbare Feder 25 kann eine möglichst schonende und immer optimale Greifkraft auch auf empfindliche Werkstücke eingestellt werden.

An dem dem Werkzeug zugewandten Ende verfügt der Greiferstift 5 über eine Greiferspitze 34, die linear ausgebildet ist, das heisst entlang der longitudinalen Richtung verläuft. Dieses Greiferelement 4 hat also nur eine Klemmwirkung in transversaler Richtung und keine Führungswirkung in longitudinaler Richtung.

Dies im Gegensatz zu den einstückigen Greifergabeln, die gegenüber angeordnet sind, und mit dem Bezugszeichen 6 angegeben sind. Diese verfügen an ihrem dem Werkstück zugewandten Ende über einen Gabelbereich 32 in Form einer Erweiterung, und der dem Werkzeug zugewandte Bereich dieser Erweiterung ist als gekrümmter Greifbereich 33 vorgesehen, vorzugsweise mit einer Krümmung, die an den Krümmungsradius des Werkstücks an dieser Position angepasst ist.

Sowohl der Greiferträger 7 als auch der rückwärtige Bereich der Greifergabel 6, das heisst die Erweiterung 31, verfügen nun über die im vorliegenden Zusammenhang wichtigen vertikalen Kulissenöffnungen 26. Diese Kulissenöffnungen 26 dienen der zwangsmässigen Steuerung der transversalen Position der Greiferelemente 4 durch die Schubstange 3. Dazu sind die Kulissenöffnungen 26 rund gestuft ausgebildet in transversaler Richtung. Es gibt einen Bereich der Anschlagsposition 27 für den zurückgezogenen Greifer, und einen Bereich der Anschlagsposition 28 für den ausgefahrenen Greifer. Die Position 27 ist jeweils werkstückseitig angeordnet, und die ausgefahrene Position 28 in transversaler Richtung weiter nach aussen vom Werkstück entfernt versetzt. Dazwischen gibt es einen Verbindungsbereich oder Verschiebungsbereich 29, der die Bereiche 27 und 28 miteinander verbindet.

Die Kulissenöffnungen 26 in den gegenüberliegenden Greiferträgern 7 respektive Erweiterungen 31 sind spiegelsymmetrisch bezüglich der longitudinalen Achse 67 ausgebildet.

In dieser Kulisse 26 läuft nun ein vertikaler Kulissenstift 30, der fest an der Schubstange 3 befestigt ist und von dieser nach unten in die Kulissenöffnung 26 hinein ragt. Wird die Schubstange 3 ausgehend von der in Figur 6 dargestellten Position in der Darstellung nach unten respektive in der Vorschubvorrichtung des Werkzeugs in longitudinaler Richtung rückwärts verschoben, so wandert mit ihr auch der vertikale Kulissenstift 30 nach unten. Er kann in transversaler Richtung nicht verschoben werden, entsprechend verschiebt sich dafür auf der linken Seite der Greiferträger 7 durch Wanderung des Stifts 30 in der Kulisse 26 nach links. Wird die Schubstange 3 auch auf der rechten Seite nach unten verschoben, so bewegt sich analog der Stift 30 nach unten und die rückseitige Erweiterung 31 wird durch diese Kurvensteuerung nach rechts verschoben. So wird die in Figur 7 dargestellte Position erreicht. Die Greifer sind nun geöffnet.

Diese Steuerung kann entweder dadurch geschehen, dass die Schubstange 3 bei feststehender Greiferstange 32 nach unten verschiebt wie oben beschrieben, oder aber dadurch, dass die Schubstange 3 fix bleibt und ausgehend von der Position in Figur 6 die Greiferstange 2 nach oben weiter verschoben wird als die Schubstange 3.

Im Transferprozess wird nun die Steuerung der Greifbewegung so realisiert, dass ausgehend von der Position in Figur 6 das ergriffene Werkstück zur nächsten Bearbeitungsstation durch synchrone longitudinale Bewegung von Greiferstange und Schubstange bewegt wird. Wenn die nächste Position erreicht ist, wird nun die Schubstange 3 ohne Bewegung der Greiferstange etwas zurück verschoben, und zwar um einen longitudinalen Versatz, der dem longitudinalen Abstand zwischen den Positionen 27 und 28 entspricht. Die Schubstange 3 bewegt sich also etwas zurück relativ zur Greiferstange 3 und durch die Steuerung in der Kulisse 26 wird über den Stift 30 dadurch automatisch in der richtigen Position das Werkstück freigegeben durch den Übergang, der über die Figuren 6 und 7 illustriert ist.

Wenn das Werkstück freigegeben wurde, bewegt sich nun die Transfervorrichtung in einer Position, wie sie in Figur 7 dargestellt ist, wieder zurück zur ersten Bearbeitungsstation. Nun wird, wenn die Greiferstange die Endposition erreicht hat, wiederum die Schubstange 3 etwas ohne Bewegung der Greiferstange nach vorne verschoben , und zwar um den longitudinalen Versatz zwischen 27 und 28, sodass im richtigen Moment in der wiederum ersten Bearbeitungsstation das Werkstück gegriffen werden kann, mithin die Greifer schliessen, was dem Übergang von Figur 7 nach Figur 6 entspricht.

Damit sind also die Relativbewegungen von Schubstange 3 und Greiferstange 2 jeweils im Bewegungsabschnitt kurz nach Erreichen der Ankunft in Übernahmeposition und kurz nach Erreichen der Ankunft der Übergabeposition etwas phasenverschoben und die Schubstange 3 mit einem anderen Weg, was realisiert wird durch Kurvengetriebe, die weiter unten dargelegt werden.

**Figur 8** zeigt den Ankopplungsbereich von Greiferstange 2 und Schubstange 3, insbesondere die Kupplungselemente 13 und 12 in einer perspektivischen Ansicht. Insbesondere ist der nach oben gerichtete Vorsprung 17 des Kupplungselements 12 ersichtlich, der dazu dient, in einen Querträger einzugreifen.

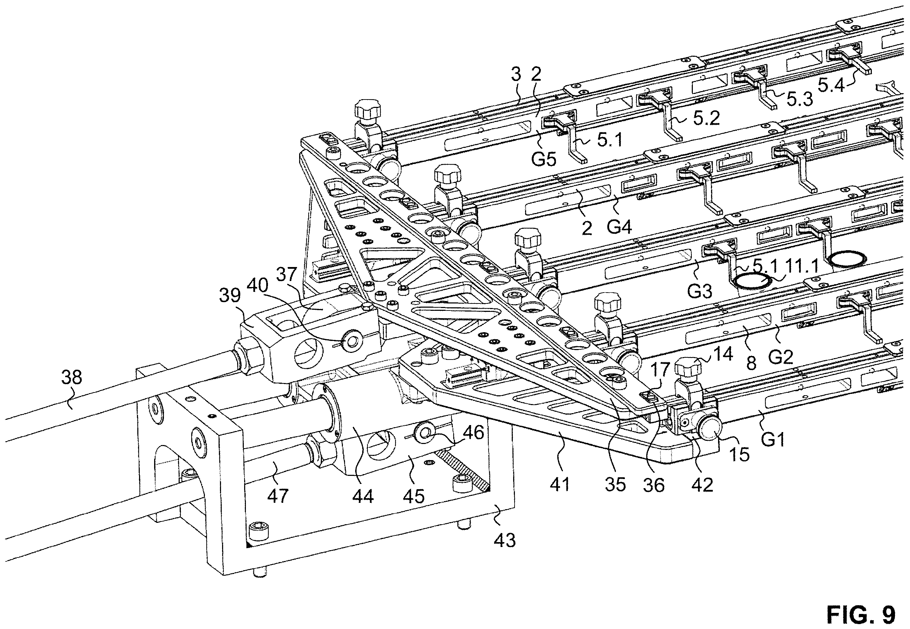

In **Figur 9** ist dargestellt, wie sämtliche Schubstangen 3 der in transversaler Richtung in einer Reihe angeordneten Steuergruppen G über eine koordinierte gemeinsame Vorrichtung in ihrer longitudinalen Richtung bewegt werden. Zu diesem Zweck gibt es einen Kupplungsquerträger 35, welcher über vertikale Ausnehmungen 36 verfügt, in welchen jeweils die nach oben gerichteten Vorsprünge 17 der Schubstangen 3 eingreifen. Der transversal verlaufende Kupplungsquerträger 35 ist über ein Drehgelenk 37 über eine Achse 40 an ein Gabelelement 39 angekoppelt, welches an eine Kupplungsstange 38 angebunden ist. Eine Vor- und Zurückbewegung der Kupplungsstange 38 bewegt mit anderen Worten den gesamten Kupplungsquerträger 35 und damit auch synchronisiert alle Schubstangen der fünf Greiferträger G1-G5.

Analog werden die Greiferstangen 2 durch einen gemeinsame Kupplungsquerträger 41 synchron gesteuert, dieser verfügt seinerseits über vertikale Ausnehmungen 42, in welche jeweils die Kupplungselemente 13 mit ihren Gabelarmen 16 von oben eingreifen. Dieser Kupplungsquerträger 41 ist ebenfalls gemeinsam für alle Greiferstangen der gesamten Vorschubvorrichtung, und ist seinerseits über eine Achse 46 und ein Kupplungsgelenk 45 an eine Kupplungsstange 47 angebunden. Der Kupplungsquerträger 41 läuft dabei auf einem Führungszylinder 44, der in einem Trägerelement 43 erhalten ist.

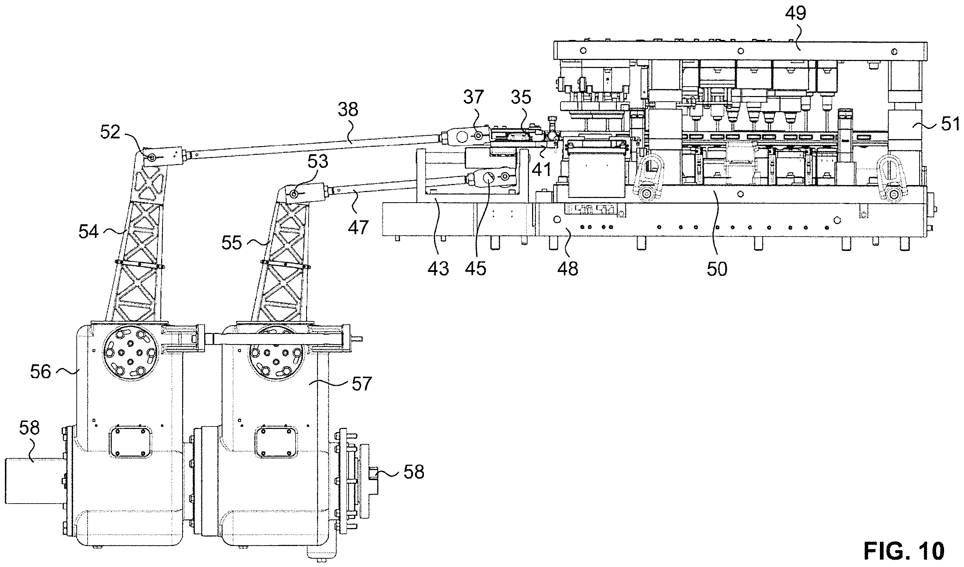

**Figur 10** zeigt, wie die Bewegung der beiden Querträger 35 und 41 im Gesamtzusammenhang gesteuert werden. Die Darstellung zeigt zusätzlich die obere Werkzeugplatte 49 und die untere Werkzeugplatte 50 der gesamten Presse sowie die Führungssäulen 51 zwischen diesen beiden Platten. Weiterhin eine untere Trägerplatte 48 der ganzen Transfereinheit, auf der auch die bereits genannten Trägereinheit 41 befestigt ist.

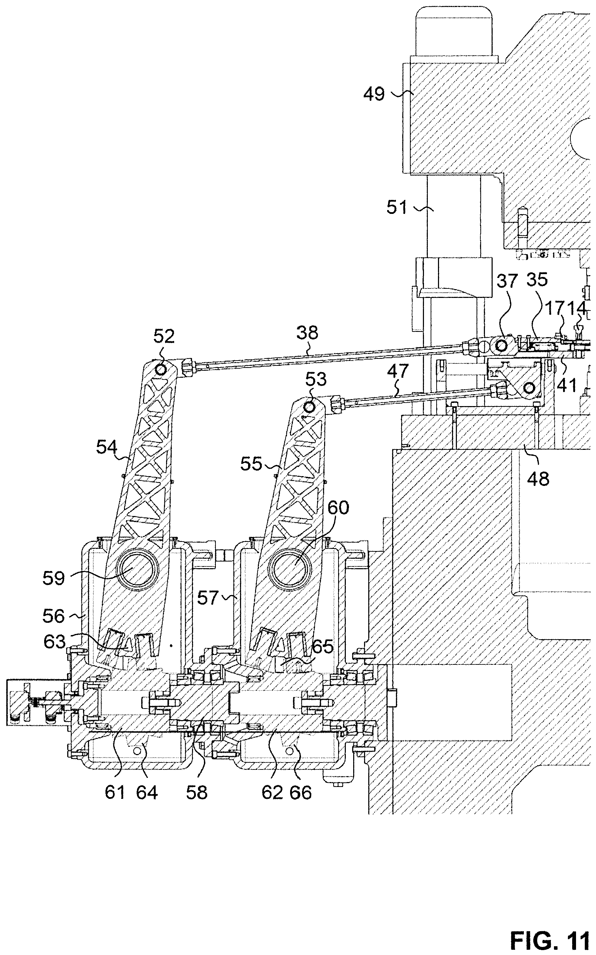

Die Bewegung der gesamten Vorschubvorrichtung wird nun über eine gemeinsame Antriebsachse 58 realisiert. Diese treibt zwei unterschiedliche Kurvengetriebe 46 und 47 an. Das Kurvengetriebe 56 dient der Steuerung der Schubstangen, und das Kurvengetriebe 57 dient der Steuerung und Bewegung der Greiferstangen und Bewegung der Greiferstangen. Die Kurvengetriebe sind jeweils über Getriebehebel 44 respektive über 55 und Umlenkungen 52 respektive 53 auf die Kupplungsstangen 38 respektive 47 umgelegt. Wie insbesondere aus **Figur 11** ersichtlich, gibt es nun bei diesen beiden Kurvengetrieben jeweils individuelle Kurvenabschnitte 61 respektive 62, Kurvenarme 63 respektive 65 und Kurvenrippen 64 respektive 66. Durch die Ausgestaltung der Kurvenrippen 64 und 66 wird nun die oben beschriebene Bewegungscharakteristik von Greiferstangen 2 und Schubstangen 3 koordiniert, mithin gesteuert, dass die Schubstange jeweils einen späteren Anschlag bei der Übernahme und Abgabeposition erreicht als die Greiferstange.

**BEZUGSZEICHENLISTE**

| | | | |
|---|---|---|---|
| 1 | Vorschubvorrichtung | 5.3 | Greiferstift in Station 3 |
| 2 | Greiferstange | 5.4 | Greiferstift in Stationen 4-7 |
| 3 | Schubstange | 6 | Greifergabel |
| 4 | Greiferelement | 6.1 | Greifergabel in Station 1 |
| 5 | Greiferstift | 6.2 | Greifergabel in Station 2 |
| 5.1 | Greiferstift in Station 1 | 6.3 | Greifergabel in Station 3 |
| 5.2 | Greiferstift in Station 2 | 6.4 | Greifergabel in Stationen 4-7 an 3 |
| 7 | Greiferträger für 5 | | |
| 8 | transversale Durchgangsöffnungen in 2 | 31 | rückseitige Erweiterung von 6 |
| 9 | transversale Durchgangsöffnungen für Greiferelemente | 32 | Gabelbereich von 6 |
| | | 33 | gekrümmter Greifbereich von 6 |
| 10 | Abdeckung | 34 | Greiferspitze von 5 |
| 11.1-11.7 | Bauteil in den Stationen 1-7 | 35 | Kupplungsquerträger für Schubstangen |
| 12 | Kupplungselement an 3 | | |
| 13 | Kupplungselement an 2 | 36 | vertikale Ausnehmungen in 35 für 17 |
| 14 | vertikale Stellschraube für 13 | | |
| 15 | horizontale Fixierschraube für 13 | 37 | Kupplungsgelenk für 35 |
| | | 38 | Kupplungsstange für Schubstangensteuerung |
| 16 | Gabelarm von 13 | | |
| 17 | nach oben gerichteter Vorsprung von 12 | 39 | Gabelelement an 38 |
| | | 40 | Achse von 37 |
| 18 | longitudinale Nut in 2 für 3 | 41 | Kupplungsquerträger für Greiferstangen |
| 19 | nach unten offene Führungsnut in 10 für 2 | | |
| | | 42 | vertikale Ausnehmungen in 41 für 13 |
| 20 | Gleitplatte | | |
| 21 | Kolben von 5 | 43 | Trägerelement für 41 |
| 22 | Durchgang in 7 | 44 | Führungszylinder von 43 |
| 23 | Erweiterung von 22 | 45 | Kupplungsgelenk für 41 |
| 24 | innerer Bereich von 22 | 46 | Achse von 45 |
| 25 | Federelement | 47 | Kupplungsstange für Greiferstangensteuerung |
| 26 | vertikale Kulissenöffnung in 7 | | |
| | | 48 | Trägerplatte von Transfereinheit |
| 27 | Anschlagsposition Greifer zurückgezogen von 26 | | |
| | | 49 | obere Werkzeugplatte |
| 28 | Anschlagsposition Greifer ausgefahren von 26 | 50 | untere Werkzeugplatte |
| | | 51 | Führungssäule zwischen 49 und 50 |
| 29 | Verschiebungsbereich von 26 | | |
| 30 | vertikaler Kulissenstift für 26 | 52 | Umlenkung von 38 auf Getriebehebel |
| | | 63 | Kurvenarm von 54 |
| 53 | Umlenkung von 47 auf Getriebehebel | 64 | Kurvenrippe auf 61 |
| | | 65 | Kurvenarm von 55 |
| 54 | Getriebehebel von Schubstangensteuerung | 66 | Kurvenrippe auf 62 |
| | | 67 | longitudinale Richtung |
| 55 | Getriebehebel von Greiferstangensteuerung | 68 | transversale Richtung |
| 56 | Getriebe für Schubstangen | G1 | Greiferstange Lage 1 |
| 57 | Getriebe für Greiferstangen | G2 | Greiferstange Lage 2 |
| 58 | gemeinsame Antriebsachse von 56 und 57 | G3 | Greiferstange Lage 3 |
| | | G4 | Greiferstange Lage 4 |
| 59 | Achse von 54 | G5 | Greiferstange Lage 5 |
| 60 | Achse von 55 | V | Versatz zwischen 2 und 3 |
| 61 | Kurvenabschnitt auf 58 für 54 | F | Federweg |
| 62 | Kurvenabschnitt auf 58 für 55 | | |

## Patentansprüche

1. Vorrichtung (1) für den getakteten longitudinalen Transport von Werkstücken (11) zwischen wenigstens zwei Bearbeitungsstationen in einer Transferpresse, **dadurch gekennzeichnet, dass**
die Vorrichtung (1) wenigstens auf einer Seite ein erstes (2) und ein zweites (3) ausschliesslich longitudinal verschiebliches Steuerelement als Steuergruppe (2, 3) aufweist, wobei die beiden Steuerelemente (2,3) relativ zueinander in ausschliesslich longitudinaler Richtung verschieblich gelagert sind, und beide Steuerelemente (2,3) über eine gemeinsame Welle (58) angetrieben werden,
wobei sich beim ersten Steuerelement um eine Greiferstange (2) für den longitudinalen Transport der Werkstücke (11) zwischen den Bearbeitungsstationen handelt, und wobei in der Greiferstange (2) wenigstens zwei in longitudinaler Richtung um den Abstand zwischen den Bearbeitungsstationen versetzte Greiferelemente (4) gelagert sind, welche ausschliesslich in transversaler Richtung verschoben werden können;
und wobei es sich beim zweiten Steuerelement um eine Schubstange (3) handelt, welche die Transversalbewegung der wenigstens zwei Greiferelemente (4) zwangsmässig steuert.

2. Vorrichtung (1) nach Anspruch 1, **dadurch gekennzeichnet, dass** die Schubstange (3) in oder an der Greiferstange (2) wenigstens abschnittsweise gleitend gelagert ist, vorzugsweise in einer longitudinalen Nut (18), die bevorzugt wenigstens abschnittsweise nach oben offen ist und/oder abschnittsweise durch Abdeckungen (10) geschlossen ist.

3. Vorrichtung (1) nach einem der vorhergehenden Ansprüche, **dadurch gekennzeichnet, dass** Schubstange (3) und Greiferstange (2) über zwei von der gemeinsamen Welle (58) angetriebene Kurvengetriebe (56,57) bewegt werden, wobei vorzugsweise die beiden Kurvengetriebe (56,57) im wesentlichen die gleiche Bewegung mit Phasenverschiebung erzeugen.

4. Vorrichtung (1) nach einem der vorhergehenden Ansprüche, **dadurch gekennzeichnet, dass** die Greiferelemente (4) wenigstens eine in vertikaler Richtung offene Ausnehmung oder Durchgangsöffnung in Form einer Kulisse (26) aufweisen und dass die Schubstange (3) jeweils an der Position des entsprechenden Greiferelements (4) eine in diese Kulisse (26) zwangsmässig die Transversalbewegung der Greiferelemente (4) steuernd eingreifende Erweiterung oder Stift (30) aufweist,
oder dass die Schubstange (3) jeweils an der Position des entsprechenden Greiferelements (4) wenigstens eine in vertikaler Richtung offene Ausnehmung oder Durchgangsöffnung in Form einer Kulisse aufweist, und dass die Greiferelemente (4) eine in diese Kulisse zwangsmässig die Transversalbewegung der Greiferelemente (4) steuernd eingreifende Erweiterung oder Stift aufweisen.

5. Vorrichtung (1) nach Anspruch 5, **dadurch gekennzeichnet, dass** die Kulisse (26) in den Greiferelementen (4) jeweils einen ersten Bereich (27) für zurückgezogenes Greiferelement (4) und einen zweiten Bereich (28) für ausgefahrenes Greiferelement (4) und einen diese beiden Bereiche verbindenden Verschiebungsbereich (29), wobei der erste Bereich (27) im Greiferelement (4) in transversaler Richtung näher beim Werkstück (11) angeordnet ist als der zweite Bereich (28), und der Verschiebungsbereich (29) als lineare oder gekrümmte, insbesondere S-förmiger Verbindungskanal oder Verbindungs-Durchgangsöffnung ausgebildet ist.

6. Vorrichtung (1) nach einem der vorhergehenden Ansprüche, **dadurch gekennzeichnet, dass** die Vorrichtung auf beiden Seiten einer longitudinalen Reihe von Bearbeitungsstationen derartige erste (2) und zweite (3) Steuerelemente aufweist, und wobei die Transversalbewegung der jeweils transversal gegenüberliegenden Greiferelemente (4) spiegelsymmetrisch bezüglich Werkstückposition zwangsmässig gesteuert sind.

7. Vorrichtung (1) nach Anspruch 6, **dadurch gekennzeichnet, dass** sie für den Transport zwischen wenigstens zwei, vorzugsweise 2-5 oder 2-4 longitudinalen Reihen von Bearbeitungsstationen der gleichen Transferpresse vorgesehen ist, und eine um eins grössere Zahl von jeweils ersten (2) und zweiten (3) Steuerelementen als die Zahl der Reihen von Bearbeitungsstationen aufweist, und die zwischen Reihen von Bearbeitungsstationen angeordneten ersten Steuerelemente (2) in beide transversale Richtungen hervorragende Greiferelemente (4) lagern und die zweiten Steuerelemente (3) vorzugsweise gleichzeitig die Greiferelemente (4) in beiden transversalen Richtungen gleichzeitig zwangsmässig steuern, wobei vorzugsweise die Kulissen (26) in den in unterschiedliche transversale Richtungen ragenden Greiferelementen (4) spiegelsymmetrisch bezüglich longitudinaler Richtung ausgebildet sind.

8. Vorrichtung nach Anspruch 7, **dadurch gekennzeichnet, dass** die zwischen Reihen von Bearbeitungsstationen angeordneten ersten Steuerelemente (2) transversal verlaufende Durchgangsöffnungen (9) aufweisen, in welchen die Greiferelemente (4) oder Greiferträger (7) von Greiferelementen (4) verschieblich gelagert sind, und wobei in longitudinaler Richtung jeweils alternierend Greiferelemente in die eine und die andere transversaler Richtung gelagert sind.

9. Vorrichtung nach einem der vorhergehenden Ansprüche 6-8, **dadurch gekennzeichnet, dass** die ersten Steuerelemente (2) der parallel angeordneten Steuergruppen (2, 3) in ihrer Bewegung über einen gemeinsamen transversal verlaufenden Kupplungsquerträger (41) für die Greiferstangen gesteuert werden, und die zweiten Steuerelemente (3) über einen gemeinsamen transversal verlaufenden Kupplungsquerträger (35) für die Schubstangen gesteuert werden, und wobei der Kupplungsquerträger (41) für die Greiferstangen, vorzugsweise über wenigstens eine Kupplungsstange (47) an ein Kurvengetriebe (57) für die Greiferstangen angebunden ist und der Kupplungsquerträger für die Schubstangen, vorzugsweise über wenigstens eine Kupplungsstange (38), an ein Kurvengetriebe (56) für die Schubstangen angebunden ist.

10. Vorrichtung (1) nach einem der vorhergehenden Ansprüche, **dadurch gekennzeichnet, dass** wenigstens eines der Greiferelemente (4) selbst oder an einem Greiferstift einen dem Werkzeug zugewandten gabelförmigen und/oder gekrümmten Greifbereich (33) zur wenigstens teilweisen umfangsmässigen Umfassung des Werkstücks aufweist, wobei vorzugsweise der Greifbereich (33) an den Radius des Werkstücks im entsprechenden Transportabschnitt angepasst ist,
oder dass wenigstens eines der Greiferelemente (4) eine dem Werkstück zugewandte im wesentlichen planare Greiferspitze (34) aufweist,
wobei vorzugsweise bezüglich Werkstück gegenüberliegende und das gleiche Werkzeug greifende Greiferelemente (4) auf der einen Seite eine im wesentlichen planare Greiferspitze (34) und auf der anderen Seite einen gabelförmigen und/oder gekrümmten Greifbereich (33) aufweisen.

11. Vorrichtung (1) nach einem der vorhergehenden Ansprüche, **dadurch gekennzeichnet, dass** wenigstens eines der Greiferelemente (4) einen Greiferträger (7) aufweist, der in der Greiferstange (2) ausschliesslich transversal verschieblich gelagert ist, und in diesem Greiferträger (7) verschieblich einen Greiferstift (5) aufweist, welcher vorzugsweise elastisch gegen das Werkstück verspannt ist, vorzugsweise über eine Feder, insbesondere eine Spiralfeder (25), oder über Druckluft oder eine Elastomerfeder, wobei die Rückstellung vorzugsweise einstellbar ausgestaltet ist.

12. Vorrichtung (1) nach einem der vorhergehenden Ansprüche, **dadurch gekennzeichnet, dass** in Abhängigkeit der entsprechenden Bearbeitungsstationen die das jeweilige Werkstück kontaktierenden Bereiche der Greiferelemente (4) respektive der in einem Greiferträger (7) gelagerten Greiferstifte (5) in vertikaler Richtung auf unterschiedlicher Höhe angeordnet sind, vorzugsweise in dem die Greiferelemente (4) respektive die Greiferstifte (5) zwei horizontale und einen diese verbindenden vertikalen Abschnitt aufweisen.

13. Verfahren zum Transport von Werkstücken (11) zwischen verschiedenen Bearbeitungsstationen einer Transferpresse, **dadurch gekennzeichnet, dass** wenigstens eine Vorrichtung nach einem der vorhergehenden Ansprüche für den Transport zwischen den Stationen eingesetzt wird.

14. Transferpresse mit einer Vorrichtung nach einem der vorhergehenden Ansprüche, vorzugsweise eine Transferpresse mit mehreren in transversaler Richtung versetzten Reihen von Bearbeitungsstationen.

15. Verwendung einer Vorrichtung nach einem der vorhergehenden Ansprüche in einer Transferpresse, vorzugsweise einer Transferpresse mit mehreren in transversaler Richtung versetzten Reihen von Bearbeitungsstationen.
